# NEW EUROPEAN PATENT SPECIFICATION

(11) **EP 0 037 054 B2**
(45) Date of publication and mention of the opposition decision: **31.03.1993**
(45) Mention of the grant of the patent: 30.07.1986
(21) Application number: 81102189.8
(22) Date of filing: 24.03.1981
(51) Int. Cl.: C09D 133/08, C08F 2/48, C08F 220/20

(54) **Coating compositions and resin moldings using same**
Überzugszusammensetzungen und sie verwendende Harzformteile
Compositions de revêtement et articles moulés en résine synthétique les utilisant

(30) Priority: 27.03.1980 JP 39735/80
(43) Date of publication of application: 07.10.1981
(73) Proprietor: MATSUSHITA ELECTRIC INDUSTRIAL CO., LTD., Kadoma-shi, Osaka-fu, 571 (JP)
(72) Inventor: Inoue, Takao, Hirakata-shi Osaka-fu (JP); Wakahata, Tamotsu, Katano-shi Osaka-fu (JP); Maeda, Yukio, Hirakata-shi Osaka-fu (JP); Niboshi, Ikuo, Kadoma-shi Osaka-fu (JP)
(74) Representative: Eisenführ, Speiser & Partner

(56) References cited:
- DE-A- 2 349 979
- DE-B- 2 430 081
- FR-A- 2 339 657
- GB-A- 1 006 587
- GB-A- 1 006 589
- US-A- 4 072 657
- CHEMICAL ABSTRACTS, vol. 90, no. 4, 1979, page 84, abstract 24897g Columbus, Ohio, USA
- S.E. YOUNG: Progress in org. coatings, 4, 225 - 249, 1976
- Merkblatt der DOW CHEMICAL über strahlungshhärtbare Materialien, August 1975

## Description

The present invention relates to coating compositions capable of forming hardened films by bridge polymerization which are extremely superior in terms of coat working property, storage stability, and are superior in terms of abrasion resistance, water resistance, thermal resistance, solvent resistance, durability and adherence property to a base material, and synthetic resin moldings of abrasion resisting property using it.

if synthetic moldings made of acrylic resin, polycarbonate resin, sterol resin, AS resin, polyvinyl chloride resin, acetate resin, ABS resin, polyester resin, etc. are insuffcient in the abrasion resistance of the surface, the surfaces are damaged due to actions such as contact and collision with other objects, scratches, etc. during the transportating and assembling operations of the moldings, thus resulting in deteriorated product-appearance or spoiled beauty. For example, lenses, covers, cases mirrors etc. are considerably damaged on the surfaces, decreasing the commodity values. In particular, resin moldings for kitchen use in electrically driven splitting and crushing equipment with cutting edges provided therein are placed under severe circumstances during use and are subjected to hard impacts and abrasion due to the crushing. In addition, the resin moldings for kitchen use are rubbed with nylon brushes even during the washing operation after the use. They are subjected to friction and thermal impacts such as exposure to hot-water. As a result, many flaws are produced in the container, thus causing stains, which not only spoil the beauty, but also allow food to be left in the flaws giving rise to a bad smell and insanitation. For example, a resin molding, made of AS resin, for a coffee mill and spice crusher is flawed in many locations at one time when cinnamon has been crushed and is stained. Also, when cloves have been crushed, the resin molding is encroached and stained. Thus, the problem is solved through replacement of the resin molding by a glass container. However, the glass container is heavier and is inconvenient to use. The size precision of the glass container during the formation is worse, the price is higher and impact resistance is worse.

The methods of improving the disadvantages of such resin molding have been variously examined. For example the methods, of coating the surfaces of the resin molding with a silicone series coating material, a melamine series coating material to improve the disadvantages through the heating and hardening operations, are already known. However, since these materials are higher in hardening temperature and are longer in hardening time, the resin molding which is vulnerable to the heat is likely to be deformed and be varied in size. For better adherence property, primer treatment is required, thus resulting in higher treatment cost. Namely, the primer treatment can be performed on acrylic resin, but cannot be performed on the AS resin, etc., which is lower in thermal deformation temperature. Thus, the resin is required to be selected for the use.

Chemical Abstracts, Volume 90, No. 4, 1979, page 84, abstract 24897 g discloses a coating composition comprising a monomer having 4 acryloyloxy groups = pentaerythritol tetraacrylate being capable of forming hardened film by the application of activated energy rays. This monomer is used together with a bisphenol A type compound having bridge members -(0X₁-0X₂-0X₃)-. This coating composition is good in flexibility and poor in terms of heat resistance, surface hardness and adherence to plastics. Also, this prior art aims at good flexibility, not at good hardness etc.

FR-A-2 339 657 discloses a coating composition containing as one ingredient a compound of the general formula of claim 1 of the present invention, but necessarily uses a component defined by formula which is not used according to the present invention. This citation necessarily needs a reactive solvent, as set out in claim 1, page 31, line 15. The epoxy acrylate of this citation can be hardened only to a hardness lower than 3H in pencil hardness, if subjected to hardening by rays.

Accordingly, an essential object of the present invention is to provide coating compositions and resin molding using the same which can eliminate the disadvantages inherent to the prior art, and which is extremely superior in terms of coat working property, storage stability, abrasion resistance, water resistance, thermal resistance, solvent resistance, durability and adherence property. This and other objects of the present invention will clearly be understood by the explanation as mentioned hereinafter in conjunction with embodiments.

The object of the present invention is met by a coating composition as defined in the independent claims.

When the proportion of the multifunctional monomer in the mixture is 70 % or less by weight, not only insufficient surface hardness, but also inferior abrasion resisting property is provided. Also, when the proportion of the multifunctional monomer exceeds 98% by weight, unfavourable phenomena such as cracked film, inferior adherence property or the like are caused although no problems occur in abrasion resisting property. In the multifunctional monomer of 3 or more functions, one type may be used singly or multifunctional monomers of two types or more may be mixed. Also, a bi-functional oligomer which has many single element bonds is required to increase the solvent resistance of the bridge hardened film and to give flexibility. The proportion of the bi-functional oligomer in the mixture is required to be within the range of 2 through 20% by weight. When the proportion in the composition of the bi-functional oligomer exceeds 20 by weight, the viscosity of the composition increases to decrease the coating property so that the uneven coating is likely to be caused and the abrasion resisting property also reduces. Also, when the proportion of the bi-functional oligomer is less than 2% by weight, the flexibility is removed in the film, thus causing cracks in the film. Also, to increase the flexibility, n is required to increase in number. When the n more than 5 , the surface hardness becomes lower and the coating property becomes worse. Also, when the n is less than, the flexibility becomes inferior.

In addition, the mixture (A) can be mixed in the range of the two functional (meth)acrylate monomer 5 through 60% by weight in terms of viscosity adjustment, adherence property with respect to the base material, etc. (hereinafter this mixture is represented as mixture (B)). When 60% or more by weight is included, the surface hardness becomes inferior and the solvent resistance, etc. becomes inferior. Also, in 5% or less by weight, the viscosity cannot be adjusted and the bridge density becomes smaller, thus resisting in inferior solvent resistance. Also, it is preferable to mix the monofunctional (meth)acrylate monomer, within the range of 2 through 50% by weight, respectively, with the mixture (A) and the mixture (B) (hereinafter they are represented as mixture (C) and mixture (D)), whereby the adherence property with respect to the base material can be improved. However, in 50% or more by weight, not only the surface hardness and abrasion resisting property, but also the solvent resistance becomes inferior. Also, in less than 2 % by weight, the adherence property with respect to the base material cannot be improved.

Acrylate-series abrasion-resisting film materials have been proposed in Japanese Patent Laid-Open Publications No. 102936/1978, No. 104638/1978, No. 126473/1977, No. 85265/1977, No. 76343/1977, No. 83477/1975, etc. in addition to the present invention. However, no proposals have been made from the prior publications, which cause the inventors to infer that the bisphenol A(meth)acrylate two functional oligomer of the formula of claim 1 is suitable to increase the surface hardness without any reduction in adherence property and to increase the solvent resistance. Also, FR-A-2 339 657 discloses a coating composition capable of forming hardened films, which, however, necessarily needs a reactive solvent and which is not sufficient in hardness for many practical applications.

In the particularly preferable embodiments of the multifunctional monomers for use in the present invention, there are enumerated dipentaerythritol hexa(meth)acrylate, dipentaerythritol penta(meth)acrylate, dipentaerythritol tetra(meth)acrylate, pentaglycerol tri(meth)acrylate, trimethyldpropane tri(meth)acrylate, pentaerythritol tri(meth)acrylate, pentaerythritol tetra (meth)acrylate, etc. as monomers of 3 functions or more. In addition, there are enumerated ethylene glycol (meth)acrylate, 1,3-propyleneglycol di(meth)acrylate, 1,4-butanediol di(meth)acrylate, 1,5-hexanediol di(meth)acrylate, diethyleneglycol di(meth)acrylate, neopentaglyci- dyldiacrylate, etc. as monomers of two functions or more. Also, as monofunctional monomers, there are enumerated 2-hydroxyethyl(meth)acrylate glycidyl(meth)acrylate, tetrahydro(meth)acrylate, etc.

The present inventors have found out that after 5 to 70 % by weight of an organic solvent has been mixed to adjust the viscosity of the coating composition thereby to fully examine the coating operational property a mixed solvent containing at least one alcohol in the range of 60% or more by weight to be selected from alcohols of 2 through 4 in number of carbons, from alcohols such as ethyl alcohol, normal propyl alcohol, isopropyl alcohol, isobutyl alcohol, normal butyl alcohol, normal pentyl alcohol, etc., aromatic hydrocarbon such as benzene, toluene, xylene, ethylbenzene, etc., and ketones such as acetone methyl ethyl ketone, etc., and ethers such as dioxy acid, etc. and esters such as ethyl acetate, acetic acid n-propyl, acetic acid n-butyl, propionic acid ethyl, etc., is preferably used for a coating material for resin moldings. For example, in the case of residual distortion remaining in the resin molding, cracks occur in the portion when methyl alcohol or ethyl alcohol is used alone. Also, a mixed solvent having the solvent of the esters or ketones of 40% or more by weight contained therein not only attacks the base material of the resin molding, but also delays the scattering speed, and remains in the film as remaining solvent to cause a problem in terms of thermal resistance. However, to improve the adherence property with respect to the base material, the aromatic hydrocarbons, the ketones, the ethers, the esters may be blended with 40% or less by weight with respect to the total amount of the organic solvent.

To apply coating composition on the surface of the resin molding to form bridge hardened film, there is a method of applying activation energy rays such as ultraviolet rays, electronic rays, radiant rays or the like according to the present invention. Among them, the method of applying the ultraviolet rays is the most preferable bridge hardening method in terms of the practical use.

To bridge-harden the coating composition with ultraviolet rays, it is required to have light sensitizer therein. Specifically, there can be enumerated the carbonyl compound of benzoin, benzoin ethyl ether, benzoin isopropyl ether, benzoin isobutyl ether, acetone, butyroin, toluoin, benzyl, benzophenone, p-chlorobenzophenone, p-methoxybenzophenone, etc.; sulfur compound such as tetramethylthiuramdisulfide; azo compound such as azobisisobutyronitrile, azobis-2,4-dimethylvaleronitrile, etc.; peroxide compound such as benzoyl peroxide, dz-tert-butyl peroxide, etc.; and so on. These light sensitizers may be singly used or the combination of two types or more may be used. To promote the acceleration effect, there are amines such as methyl diethanol amine, triethanol amine, N-methylmorpholine, triethylamine, dibutylamine, N,N-dimethylbenzylamine, N,M-dimethylaniline, etc.

The addition amount of these light sensitizers is preferable to be 0.01 through 10 parts by weight with respect to 100 parts by weight in the total of mixtures (A), (B), (C), (D) and the organic solvent. In the 10 parts or more by weight, bad influences wherein weather resistance of coloring the film decreases will be produced. Also, in the 0.01 parts or less by weight, the hardening is difficult to be performed.

Inorganic materials such as charge preventing agent, interfacial activator, pigment, aerosil etc. can be properly added, when required, to the coating composition for use in the present invention.

Also, the coating composition used in the present invention can be applied for the convenience of the operation by spray application, dipping application, rotation application, brush coating or the like. To improve the storage stability, the polymerization inhibitor of 10 through .2,000 ppm is required to be added. The polymerization inhibitor of 2,000 ppm or more delays the bridge hardening speed and the polymerization inhibitor of 10 ppm or less deteriorates the storage stability. p-benzoquinone, hydroquinone, p-methoxyphenol or the like can be used as the polymerization inhibitor.

The coating composition used in the present invention is preferable to be 10 cps (mPa.s) or more in viscosity at 25°C and is desired not to be influenced by the hardness of the base material when the bridge hardened film has been rubbed by the hard object. As a result, the bridge hardened film is required to be 5 µ or more, preferably 10 w or more.

The contents of the present invention will be described in more detail with reference to embodiments. Before preceding to the description, it is to be noted that the evaluation in the embodiments was performed on the following four items as described hereinbelow.
1. Abrasion resistance concerning to pencil hardness according to JIS D0202 and steel wool test of chaff check by the steel wool of #000, with the results to be classified by marks 0, 4, X, 0 showing that the surface is hardly injured when lightly rubbed, A showing that the surface is little injured when lightly rubbed, and X showing that the surface is seriously injured when lightly rubbed.
2. Adherence concerning to close cut of cellotape exfoliation test in which 11 cuttings are provided lengthwise and breadthwise in the film, at the intervals of 1 mm, by a knife, 100 meshes each being of 1 mm² are made, the cellotape is applied thereon and is quickly peeled off, the peeling operation being repeated three times at the same location, with the results to be classified by marks 0, 4, X, 0 showing that no exfoliated meshes are formed even after three-time repetition, A showing that exfoliated meshes of 1 through 50 are formed after three-time repetition, and X showing that exfoliated meshes of 51 through 100 are formed after three-time repetition.
3. Solvent resistance, in which abrasion resistance coating is applied on two acrylic plates. A spacer is inserted therebetween, acetone is put into the inner side and is closed, and thereafter, the change of the film is observed from outside, with the results of the film is observed from outside, with the results to be classified by marks 0, Δ, X, 0 showing that no changes are provided for 1 hour or more, A showing that no changes are provided for 30 minutes or more, and X showing that cracks and exfoliation are caused in 30 minutes or less.
4. Visual evaluation of application property and the coated film provided by dipping application, but the heating application being employed in place of the dipping operation when no solvents are contained.

### Experiment 1:

### Embodiment 1 - 5

Such coating compositions as shown in Table 1 were applied, respectively, on acrylic base plates. Thereafter, they were subjected to setting. Ultraviolet rays of 80 W/cm were applied 10 cm under the lamp for 30 seconds to form bridge hardened films on the base plates. The test results obtained were shown in Table 1.

### Experiment 2

Coating compositions shown as in Embodiment 2 Table 1 were adjusted in viscosity with isopropylalcohol. Thereafter, they were applied on the acrylic base plates through dipping. The application property was observed. They were subjected to setting for 10 minutes. Thereafter, ultraviolet rays of 80 W/ cm were applied 10 cm under the lamp to form bridge hardened films on the base plates. The results of the film characteristics were shown in Table 2.

### Experiment 3

The coating compositions as in Embodiment 5 of Table 1 were diluted with mixed solvent. Thereafter,they are applied on the acrylic base plates through dipping. The application property was observed. They were subjected to setting up to each of solvent scattering times (time required for the contained solvent of 90% or more to be scattered). Thereafter, ultraviolet rays of 80 W/cm were applied 10 cm under the lamp to form bridge hardened films on the base plates. The results of the film characteristics were shown in Table 2.

Table 1 shows the test results of test pieces with respect to the embodiments 1 to 5 and comparison examples 1 and 2 in the terms of film contraction, pencil hardness, adherence, steel wool test, solvent resistance.

Table 2 shows the test results of test pieces with respect to the embodiment 2 including two pieces 1 and 2 and comparison examples 2 and 3 the terms of application property, abrasion resistance of moldings including film thickness, steel wool test and nylon swab, adherance property, and pencil hardness.

Table 3 shows the test results of test pieces with respect to the embodiment 5 including two pieces 1 and 2 and comparison examples 4 to 5 in terms of characteristics of film including pencil hardness adherence and nylon swab, application property and solvent scattering time.

In each of Tables 1 to 3, coating compositions of each of the test pieces are listed in connection with parts of weight.

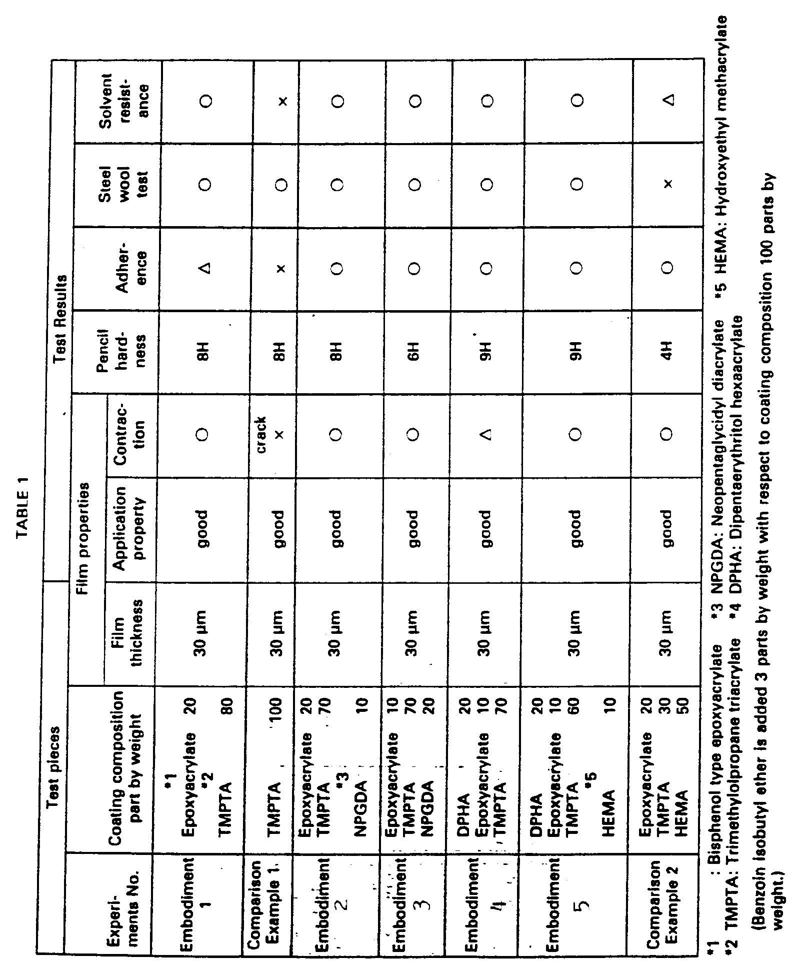

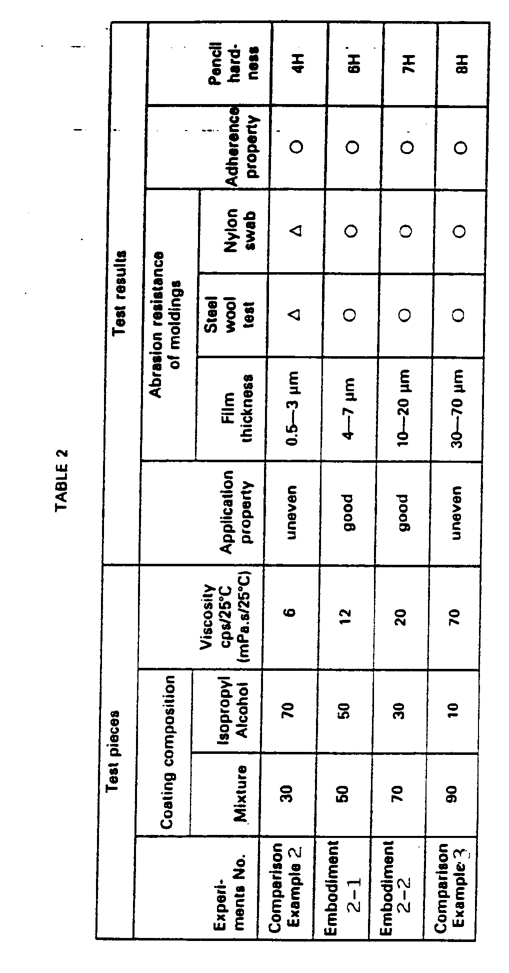

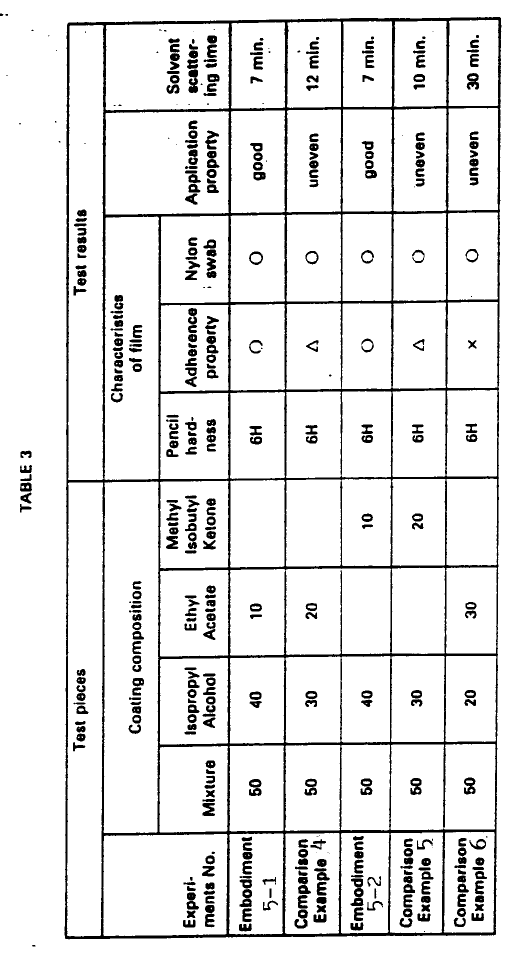

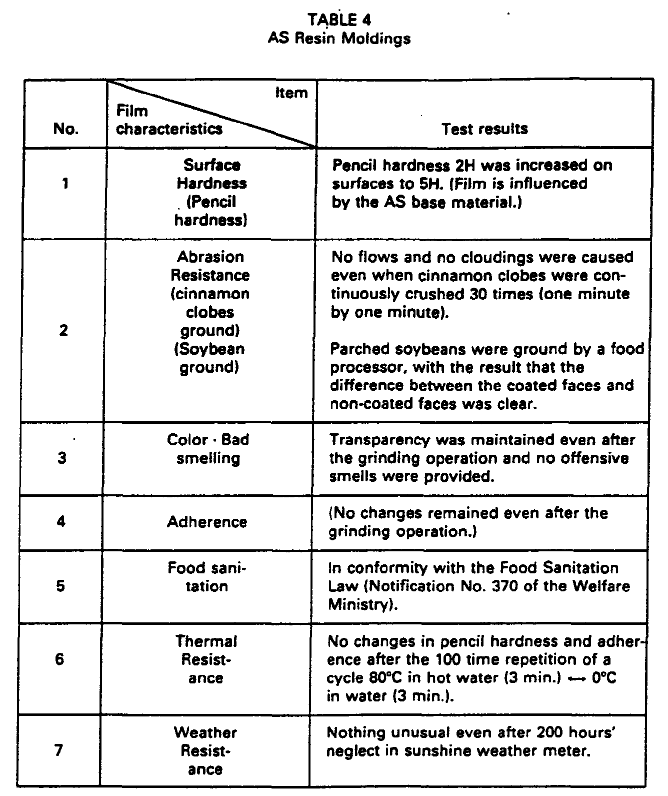

The material 2-2 in Table 2 and the material 5-2 in Table 3 were applied on AS resin moldings for kitchen use (vessels for spice ground materials, vessels forfood processors) through dipping. Thereafter, the ultraviolet rays were applied to bridge-harden the films. The film characteristics were shown in Table 4.

## Claims

1. A coating composition comprising: 100 parts by weight of a mixture (A) composed of 80 to 98% by weight of at least one type of multifunctional monomer selected from a group of compounds having 3 or more acryloyloxy groups and/or methacryloyloxy groups per molecule and 2 to 20% by weight of a bi-functional oligomer represented by the following general formula 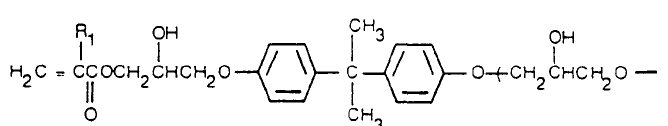 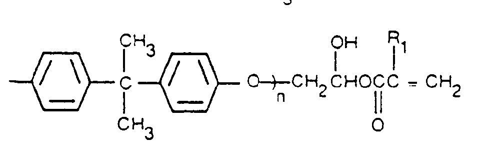 wherein R₁ represents hydrogen or a methyl group, and n is an integer of 1 to 5; 0.01 to 10 parts by weight of a light sensitizer; and 10 to 2000 ppm of a polymerisation inhibitor; said composition being capable of forming a bridge hardened film upon exposure to irradiation.

2. A coating composition as claimed in claim 1, wherein mixture (A) is mixed with 5 to 60% by weight, related to the mixture thereby obtained, of a two-functional (meth)acrylate monomer.

3. A coating composition as claimed in claim 1, wherein mixture (A) is mixed with 2 to 50% by weight, related to the mixture thereby obtained, of a monofunctional (meth)acrylate monomer.

4. A coating composition as claimed in claim 2, wherein mixture is mixed with 2 to 50% by weight, related to the mixture thereby obtained, of a monofunctional (meth)acrylate monomer.

5. A coating composition according to any one of claims 1 through 4, wherein the multifunctional monomer is trimethylol propane tri(meth)acrylate or dipentaerythritol-hexa(meth)acrylate.

6. A coating composition according to any one of claims 1 through 5, comprising 5 to 70% by weight of an organic solvent containing 60% or more by weight of an alcohol having 2 to 4 carbon atoms.

7. A resin molding having a surface layer of a coating composition comprising 100 parts by weight of a mixture (A) composed of 80 to 98% by weight of at least one type of multifunctional monomer selected from a group of compounds having 3 or more acryloyloxy groups and/or methacryloyloxy groups per molecule and 2 to 20% by weight of a bi-functional oligomer represented by the following general formula 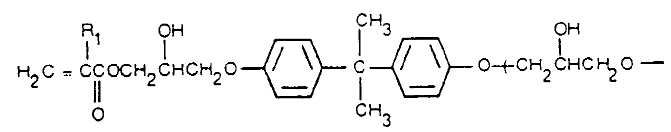 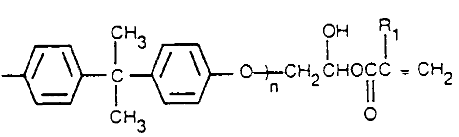 wherein R₁ represents hydrogen or a methyl group, and n is an integer of 1 to 5; 0.01 to 10 parts by weight of a light sensitizer; and 10 to 2000 ppm of a polymerisation inhibitor; said layer being in the form of bridge hardened film due to the application of polymerizing radiation thereto.

## Patentansprüche

1. Überzugszusammensetzung, folgendes umfassend: 100 Gewichtsteile einer Mischung (A), die zusammengesetzt ist aus 80 bis 98 Gew.-% zumindest einer Artvon multifunktionellem Monomeren, ausgewählt aus der Gruppe von Verbindungen, die 3 oder mehr Acryloyloxygruppen und/oder Methacryloyloxygruppen pro Molekül aufweisen und aus 2 bis 20 Gew.-% eines bifunktionellen Oligomeren der nachstehenden allgemeinen Formel 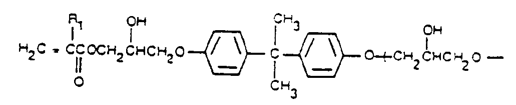 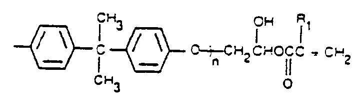 worin R₁ Wasserstoff oder eine Methylgruppe ist, und n eine ganze Zahl von 1 bis 5 ist; 0,01 bis 10 Gewichtsteile eines Lichtsensibilisators; und 10 bis 2000 ppm eines Polymerisationshemmers; wobei diese Zusammensetzung in der Lage ist, einen brückengehärteten Film zu bilden, wenn sie Strahlung ausgesetzt wird.

2. Überzugszusammensetzung gemäß Anspruch 1, worin die Mischung (A) mit 5 bis 60 Gew.-%, bezogen auf die hierdurch erhaltene Mischung, eines bifunktionellen (Meth)acrylatmonomeren gemischt wird.

3. Überzugszusammensetzung gemäß Anspruch 1, worin die Mischung (A) mit 2 bis 50 Gew.-%, bezogen auf die hierdurch erhaltene Mischung, eines monofunktionellen (Meth)acrylatmonomeren gemischt wird.

4. Überzugszusammensetzung gemäß Anspruch 2, worin diese Mischung mit 2 bis 50 Gew.-%, bezogen auf die hierdurch erhaltene Mischung, eines monofunktionellen (Meth)acrylatmonomeren gemischt wird.

5. Überzugszusammensetzung gemäß einem der Ansprüche 1 bis 4, worin das multifunktionelle Monomere Trimethylolpropantri(meth)acrylat oder Dipentaerythritolhexa(meth)acrylat ist.

6. Überzugszusammensetzung gemäß einem derAnsprüche 1 bis 5, die 5 bis 70 Gew.-% eines organischen Lösungsmittels mit einem Gehalt von 60 Gew.-% oder mehr eines Alkohols mit 2 bis 4 Kohlenstoffatomen umfaßt.

7. Harzformteil mit einer Oberflächenschicht einer Überzugszusammensetzung, die 100 Gewichtsteile einer Mischung (A) umfaßt, welche zusammengesetzt ist aus 80 bis 98 Gew.-% zumindest einer Art von multifunktionellem Monomeren, ausgewählt aus der Gruppe von Verbindungen, die 3 oder mehr Acryloyloxygruppen und/oder Methacryloyloxygruppen pro Molekül aufweisen und aus 2 bis 20 Gew.-% eines bifunktionellen Oligomeren der nachstehenden allgemeinen Formel 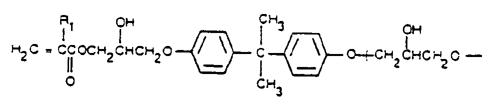 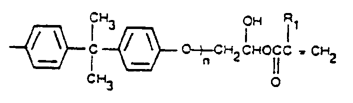 worin R₁ Wasserstoff oder eine Methylgruppe ist, und n eine ganze Zahl von 1 bis 5 ist; 0,01 bis 10 Gewichtsteile eines Lichtsensibilisators; und 10 bis 2000 ppm eines Polymerisationshemmers; wobei diese Schicht durch Aussetzung an einer polymerisierenden Strahlung die Form eines brückengehärteten Filmes hat.

## Revendications

1. Composition de revêtement comprenant 100 parties en poids d'un mélange (A) constitué de 80 à 98 % en poids d'au moins un type d'un monomère multifonctionnel à choisir parmi un groupe de composés ayant 3 ou davantage groupes acryloyloxy et/ou groupes méthacryloyloxy dans une molécule et de 2 à 20 % en poids d'un oligomère bifonctionnel représenté par la formule : 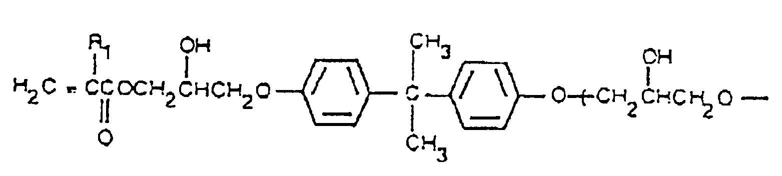 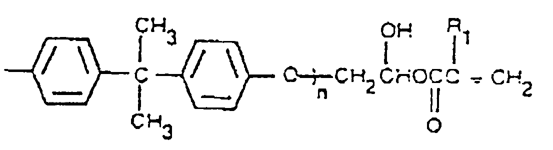 où R₁ représente l'hydrogène ou un groupe méthyle et n est un des nombres entiers 1 à 5; 0,01 à 10 parties en poids d'un produit de sensibilisation à la lumière; et 10 à 2000 ppm d'un inhibiteur de polymérisation, ladite composition étant capable de former un film durci par pontage lors de l'exposition à une irradiation.

2. Composition de revêtement selon la revendication 1, dans laquelle le mélange (A) est mélangé avec 5 à 60 % en poids, par rapport au mélange ainsi obtenu, d'un monomère de (méth)acrylate bifonctionnel.

3. Composition de revêtement selon la revendication 1, dans laquelle le mélange (A) est mélangé avec 2 à 50 % en poids, par rapport au mélange ainsi obtenu, d'un monomère de (méth)acrylate monofonctionnel.

4. Composition de revêtement selon la revendication 2, dans laquelle ce mélange est mélangé avec 2 à 50 % en poids, par rapport au mélange ainsi obtenu, d'un monomère de (méth)acrylate monofonctionnel.

5. Composition de revêtement selon l'une quelconque des revendications 1 à 4, dans laquelle le monomère multifonctionnel est du tri(méth)acrylate de triméthylol propane ou de l'hexa (méth)acrylate de dipentaé- rythritol.

6. Composition de revêtement selon l'une quelconque des revendications 1 à 5, constituée de 5 à 70 % en poids d'un solvant organique contenant 60 % ou davantage en poids d'un alcool ayant 2 à 4 atomes de carbone.

7. Moulage de résine ayant une couche superficielle d'une composition de revêtement comprenant 100 parties en poids d'un mélange (A) constitué de 80 à 98 % en poids d'au moins un type de monomère multifonctionnel choisi parmi un groupe de composés ayant 3 ou davantage groupes acryloyloxy et/ou groupes méthacryloyloxy dans une molécule et de 2 à 20 % en poids d'un oligomère bifonctionnel représenté par la formule générale suivante : 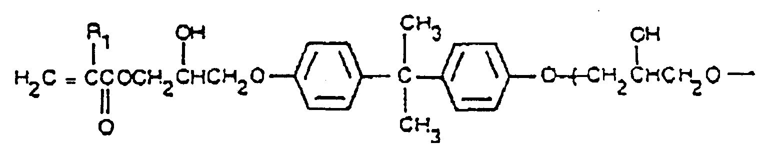 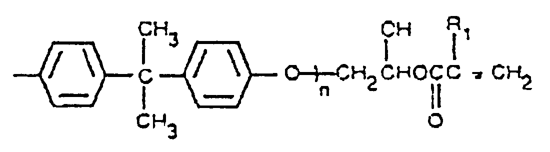 où R₁ représente l'hydrogène ou un groupe méthyle, et n est un des nombres entiers 1 à 5; 0,01 à 10 parties en poids d'un produit de sensibilisation à la lumière; et 10 à 2000 ppm d'un inhibiteur de polymérisation; ladite couche étant étant sous la forme d'un film durci par pontage par l'application à celle-ci d'un rayonnement polymérisant.
